# EUROPEAN PATENT APPLICATION

(11) **EP 0 740 919 A1**
(43) Date of publication of application: **06.11.1996**
(21) Application number: 96106941.6
(22) Date of filing: 02.05.1996
(51) Int. Cl.: A47J 31/40

(54) **Automatic machine for making espresso coffee**

(30) Priority: 04.05.1995 IT GE950048
(71) Applicant: ARIETE S.r.l., I-50040 Settimello di Calenzano (Firenze) (IT)
(72) Inventor: Baldacci, Lapo, 50129 Firenze (IT)
(74) Representative: Porsia, Attilio, Dr.

(57) **Abstract**

Machine for making espresso coffee, comprising a reservoir for water (102), a boiler (302), a pump (202) inserted in the circuit between the said reservoir and the said boiler, a container (20) for the coffee powder, and a coffee powder infusion chamber (105) connected to the said boiler, characterized in that the said machine comprises:
- means for batching and loading the coffee powder into the infusion chamber;
- means for compressing the said powder in the infusion chamber;
- means for infusing the water, from the said boiler, in the infusion container; means for dispensing the coffee infusion from the said infusion chamber, and
- means for extracting and expelling the spent coffee powder compress from the said infusion chamber.

## Description

The present invention relates to machines for making espresso coffee, and in particular relates to a completely automatic machine for making espresso coffee, which is compact, simple to maintain and low in cost.

According to one of its main characteristics, the machine for making espresso coffee according to the invention comprising a reservoir for water, a pump for sending the said water to a boiler, a container for the coffee powder, and a chamber for infusing the coffee powder with water from the said boiler, is characterized in that the said machine operates automatically and comprises:
- means for batching and loading the coffee powder into the infusion chamber;
- means for compressing the said powder in the infusion chamber;
- means for infusing the water,- from the boiler, in the chamber and for dispensing the espresso coffee produced in this way; and
- means for extracting and expelling the spent coffee powder compress from the said infusion chamber.

According to a further characteristic of the invention, the infusion chamber is mounted on a rotating carousel, eccentrically with respect to the axis of the said carousel, said carousel being coupled to a driveshaft connected by suitable means of transmission to drive means. The means of transmission transmit the motion to the said driveshaft intermittently, in such a way that a complete rotation of the carousel involves four stopping stations, without the rotation of the drive means being stopped.

Further advantages and characteristics of the present invention will emerge from the following detailed description of an embodiment thereof given, for illustrative and nonlimiting purposes, with reference to the appended drawings in which:
Figure 1 is a diagrammatic view, partially in horizontal development, of the machine according to the invention.
Figure 2 is a transverse sectional view on the plane I-I of Figure 3 of the machine for making espresso coffee according to the invention, diagrammatically illustrating the cylindrical infusion chamber in the four phases of making the espresso coffee.
Figure 3 is a longitudinal sectional view on the plane II-II of Figure 2, depicting the machine of the invention in the rest phase;
Figure 4 is a longitudinal sectional view on the plane III-III of Figure 2, depicting the machine in the phase of loading the infusion chamber;
Figure 5 is a longitudinal sectional view on the plane II-II of Figure 2 depicting machine in the phase of compressing- the coffee powder and dispensing the espresso coffee;
Figure 6 is a longitudinal sectional view on the plane III-III of Figure 1, depicting the machine in the phase of extracting the spent coffee powder compress;
Figure 7 is a longitudinal sectional view on the plane VI-VI of Figure 2, depicting the machine in the phase of compressing the coffee powder and dispensing the espresso coffee;
Figure 8 is a longitudinal sectional view taken on the plane VII-VII of Figure 2 of an enlarged feature of the pipe for injecting water into the infusion chamber;
Figure 9 is a plan view taken on the plane passing through the line VIII-VIII of Figure 5, of the system for transmitting the motion of the rod which drives the cylindrical infusion chamber;
Figure 10 is a fully developed view of a feature of the cam means for driving the bottom of the cylindrical chamber; and
Figures 11 and 12 are fully developed views of the cam system for transmitting the motion to the crosspiece which carries the compression means.

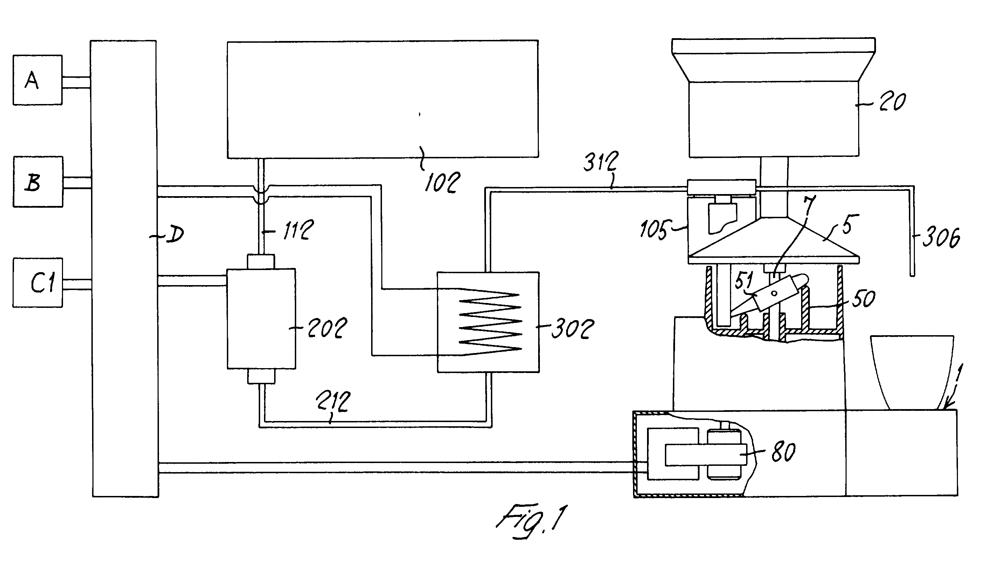

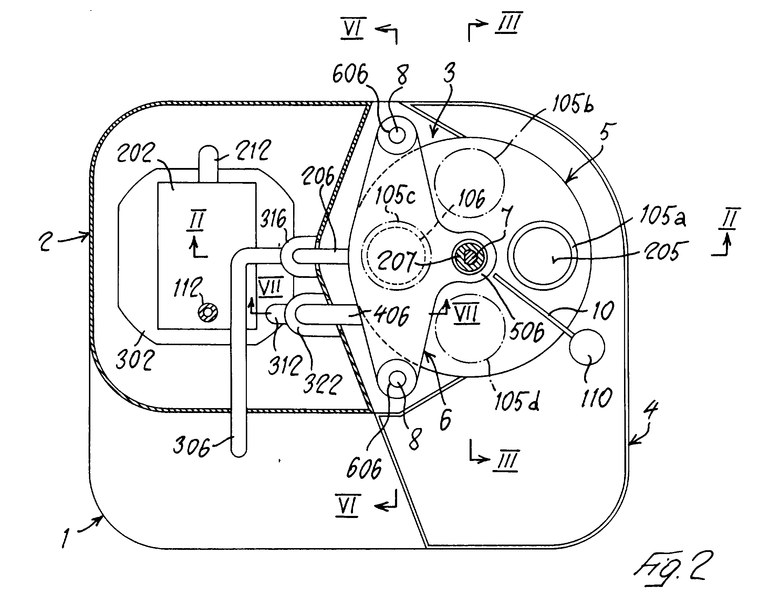

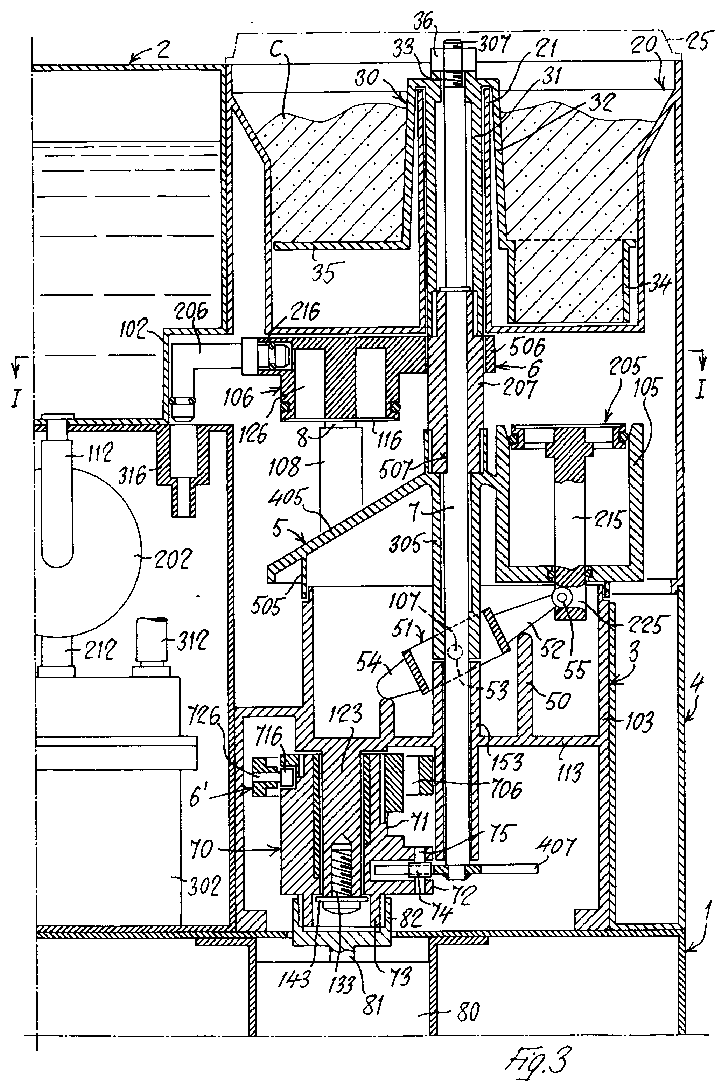

With reference to the drawings, and with particular reference to Figures 1, 2 and 3, the machine according to the invention comprises a base unit 1 on which are arranged three modules connected together and connected to the base unit: the module 2 for supplying and heating the water, the module 3 for making the espresso coffee and the module 4 for collecting the coffee grounds. In the module 2, the reservoir 102 (not shown; see Figure 2), the pump 202 and the boiler 302 are connected together in series via the pipes 112 and 212 respectively. The boiler 302 moreover has a pipe 312 which leads into a plug-in socket 322. The module 3 comprises the actual machine for making espresso coffee. Mounted in the said module 3 is the carousel 5 in which is made in one piece the cylindrical infusion chamber 105 provided with a bottom plate 205; the said chamber 105 in the drawing of Figure 2 is illustrated in four different positions 105a, 105b, 105c and 10d, subsequently illustrated in detail in Figures 3, 4, 5 and 6, respectively. The said carousel 5 rotates about the shaft 7. Mounted on the said shaft 7 is a bush 207 into which is also inserted, via a hole in one projecting lobe 506 thereof, a crosspiece 6 above the carousel 5; at its two ends the said crosspiece 6 is mounted on two bars 8 inserted into the holes 606 in the said crosspiece 6. The crosspiece 6 is provided with two spouts: the spout 406 is plugged via its free end into the plug-in socket 322 of the pipe 312 connected to the boiler 302; the spout 206 connects the said crosspiece with the coffee dispensing pipe 306, as described subsequently. Above the carousel 5 and the crosspiece 6 is a container for the coffee powder, (illustrated in greater detail in Figures 3-6). A vane 10, the purpose of which will be described later, extends from a rod 110 positioned outside the carousel 5. The said rod 110 rests on the bottom wall of the module 4 for collecting the coffee grounds.

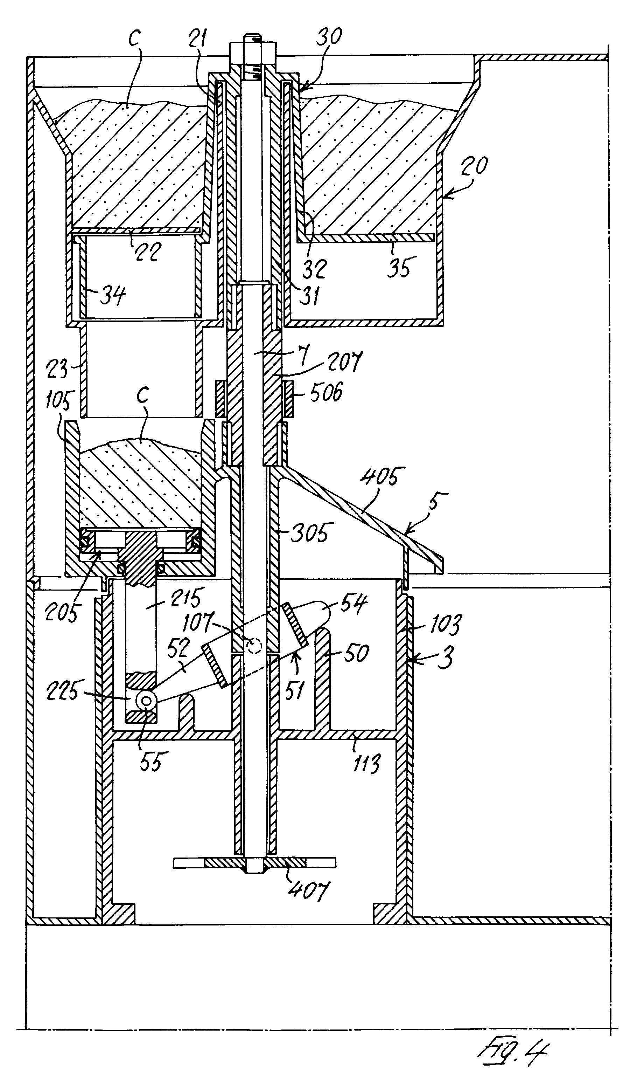

Illustrated in Figure 4 is a partial enlarged sectional view of the machine on the plane II-II of Figure 3. The reservoir 102 for the water and the container 20 for the coffee powder, which were excluded from the view of the previously described figure, are visible. The reservoir 102 for the water, as described earlier, is connected via the pipe 112 to the pump 202, and the said pump is connected to the boiler 302 via the pipe 212. The said boiler dispatches the hot water via the pipe 312. On the other hand, the coffee powder container 20 is placed above the carousel 5 and the crosspiece 6 and coaaxial with the carousel; the container is provided centrally with a tube 21 into which the element 31 is inserted, while its lateral walls are integral with the outer structure of the machine, and the said container is provided with a cover 25. Introduced coaxial with the said container 20 and inside it is a batcher element 30 comprising a cylindrical element 31 which as already mentioned is inserted inside the tube 21 of the container 20. One end of the said element 31 is coupled with the bush 207 of the shaft 7, and at the other end the element 31 is provided with a through-hole 33 into which the threaded end 307 of the shaft 7 is inserted and locked with the nut 36. From round about the said end of the said cylindrical element 31 there issues a frustoconical limb 32 directed towards the inside of the container 20 which at a little over half the depth thereof terminates in a plane ledge 35 parallel to the bottom of the container 20. In a given position, the ledge 35 of the batcher 30 presents a hole which opens into a cylindrical outlet 34, the purpose of which will be described later.

The shaft 7 is provided, as stated earlier, with a bush 207 fitted in so as to jut into the hollow 507 of the said shaft. The said bush is coupled with the cylindrical element 31 of the batcher 30 and in turn abuts at the bottom against the sleeve 305 of the carousel 5. At its lower end, inside the box element 103 and beyond the intermediate surface 113, the shaft 7 is connected to the drive means 80 via a Maltese Cross transmission device. In this device, the plate 407 is mounted on the said shaft 7, and the crank 72 provided with a pin 74 are made on the bush 70 described subsequently, which acts as stopping drum. The said bush is revolvably mounted on the pin 123 projecting from the surface 113 of the box element 103 by virtue of the washer 143 of the fixing screw 133.

The carousel 5 is formed by a hollow frustoconical element 405 provided centrally with a sleeve 305 into which the shaft 7 is couplingly inserted. At the bottom the said sleeve rests on the upper edge of the cylindrical channel 153 which houses the lower portion of the said shaft 7. The chamber 105 is, as illustrated in Figure 2, made in one piece eccentrically with respect to the sleeve 305. The lower face of the element 405 has a flange 505 which juts out and rests on the lateral wall of the box element 103.

Provided inside the chamber 105 is a perforated bottom plate 205 connected to one end of a rod 215 whose opposite end is engaged with the arm 52 of a rocker 51 which pivots on the pins 107 projecting from the rod 7 into the holes 53. The other arm 54 of this rocker 51 likewise is free. The arm 52 controls the movement of the rod 215 via the roller 55 which is engaged in the through-hole 225. The raising and lowering movement of the two arms 52, 54 of the rocker 51 is determined by the cam 50 formed in one piece on the intermediate surface 113.

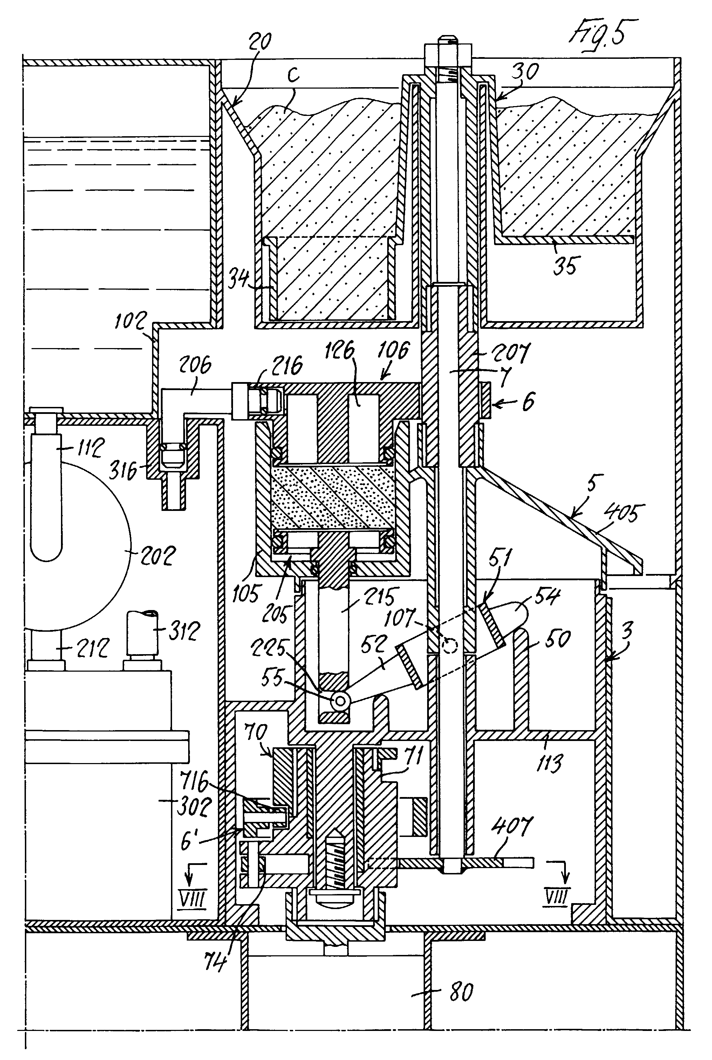

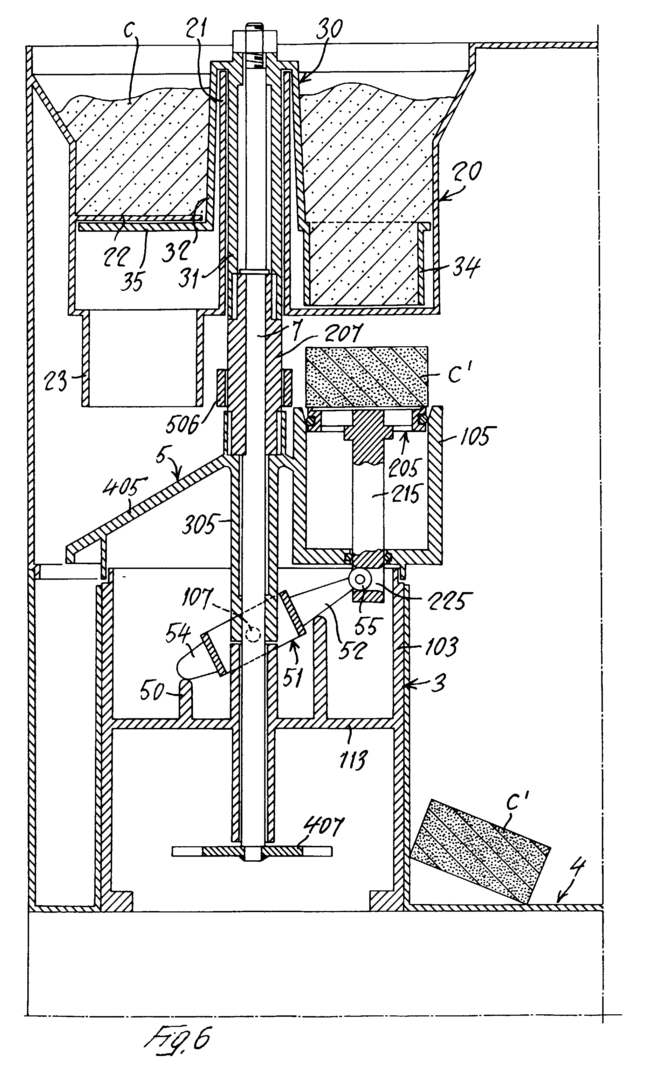

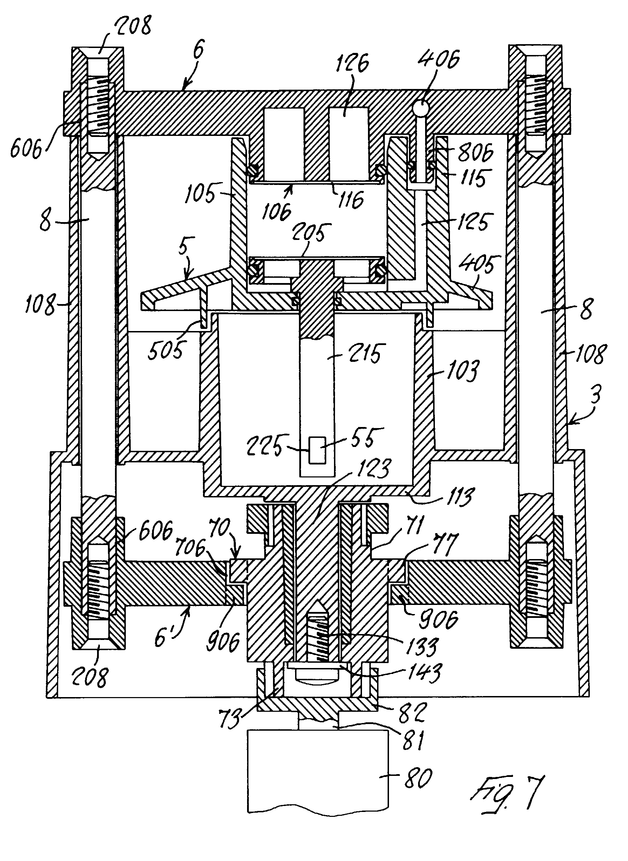

The crosspiece 6 is mounted on the bars 8 and fixed thereto in the manner illustrated in Figure 7 and described later. The said crosspiece 6 exhibits the pusher element 106 comprising a downward projecting cylindrical body provided with an axial cavity 126, closed at the end below the perforated plate 116, and communicating via a radial through-hole 216 with the dispensing spout 206 described earlier, -which at the opposite end plugs into the socket 316 of the dispensing pipe 306. The two bars 8 pass through the intermediate surface 113 inside the two fixed cylindrical guides 108 so as to join up with the lower crosspiece 6' (see also Figure 7). Centrally the said crosspiece 6' has a hole 706 provided with a roller 716 rotating on a peg 726 radial to the said hole 706. Said roller is the cam roller of the cam 71 formed on the surface of the motion transmission bush 70, which at the bottom, by virtue of the plugging of its ferrule 73 into the key 82 of the shaft 81 of the drive means 80 allows the motion to be transmitted in the manner which will be described later. The bush 70 is revolvably mounted on the pin 123 in the manner described previously.

Illustrated in Figure 4 is the machine of the invention sectioned on the plane III-III of Figure 2, during the phase of loading the coffee powder C into the infusion chamber 105. Identical parts have identical numerals to those cited previously. Also visible in this figure is the cylindrical outlet 23 for unloading the coffee powder from the container 20 into the chamber 105, as well-as the vane 22 of the container 20, the purpose of which will be described later.

Illustrated in Figure 5 is a view of the machine entirely similar to that of Figure 3, except for the fact that the machine is at the termination of the phase for compressing the coffee powder C, before the succeeding infusion and dispensing phase.

Illustrated in Figure 6 is a view of the machine entirely similar to that of Figure 4, except for the fact that the machine is in the phase for extracting the spent coffee powder compress C'.

Illustrated in Figure 7 is a sectional view on the plane VI-VI of Figure 2 of the machine of the invention. The identical parts designated by the same numerals can be seen. The figure shows the pusher 106 projecting downwards from the crosspiece 6 in the act of compressing the coffee powder contained in the chamber 105. The crosspiece has, in line with the already described spout 406, and orthogonal thereto, a hot water injection spigot 806 which is inserted into the socket 115 which via the pipe 125 carries the water to the infusion chamber 105. Also visible are the bars 8 sliding in the hollow cylindrical guides 108 and fixed, at their ends, in the holes 606 in the crosspieces 6 and 6' by the screws 208. As already described earlier, centrally, the lower crosspiece 6' has an axial hole 706 wherein it engages with the cam 71 of the bush 70 in the manner described earlier. As is evident in the figure the bush furthermore has two projections 77 which engage with the reliefs 906 of the peripheral edge of the hole 706 in the crosspiece 6' in the manner described subsequently.

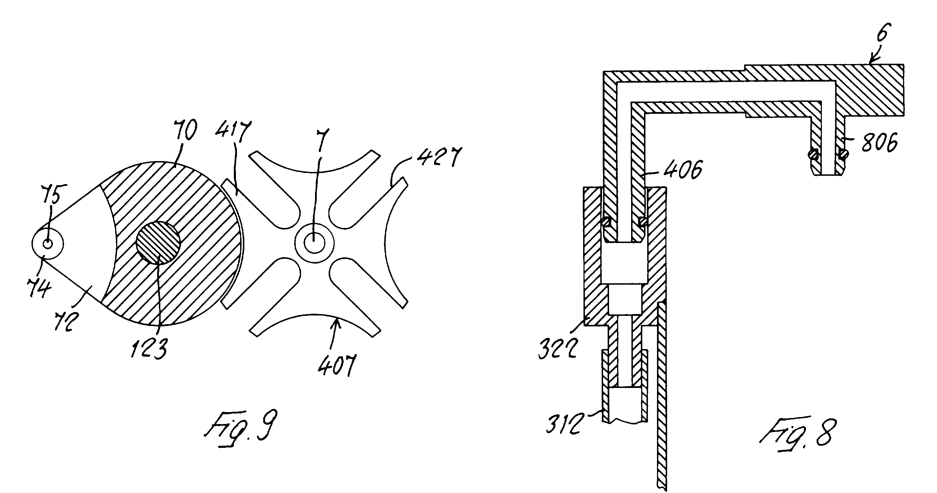

Figure 8 is an enlarged sectional view of a feature of Figure 2, on the plane VII-VII of the said figure. Illustrated in the said figure is the plugging of the pipe 406 of the crosspiece 6 into the socket 322 of the pipe 312 from the boiler (see also Figs. 1 and 2), as well as the spigot 806, illustrated in Figure 7, for injecting water into the chamber 115.

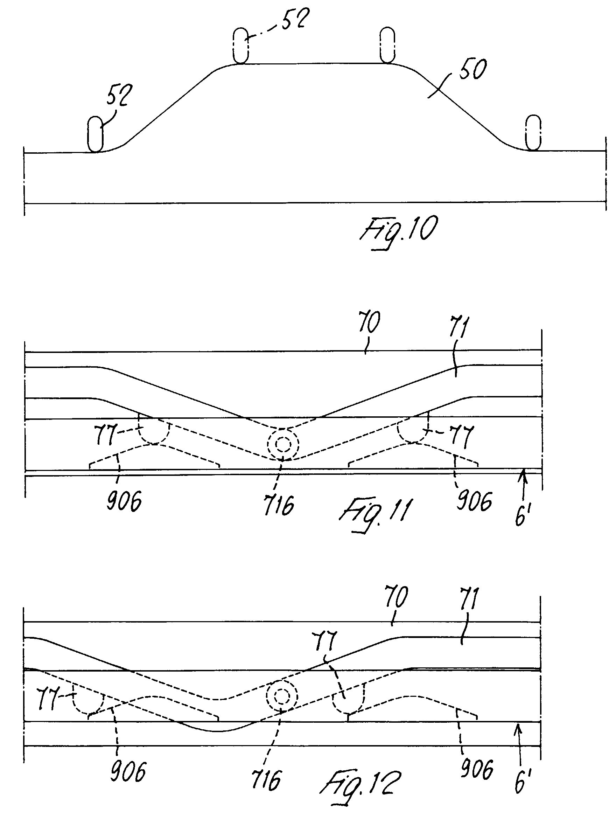

Illustrated in Figure 9 is an enlarged feature sectioned on the plane VIII-VIII of Figure 5: The said feature illustrates the transmission of the motion by means of a Maltese Cross device between the bush 70 already described and the plate 407 mounted on the shaft 7, which plate has four lobes 417 and four slots 427. The said bush has a crank 72 provided with a pin 75 to which is hinged a roller 74 which acts as engagement for the plate 407 in a manner known per se and described subsequently.

Figure 10 represents a planar development of the displacement of the arm 52 over the profile of the cam 50 during a rotation of the shaft 7.

Finally, Figures 11 and 12 represent a planar development of the salient phases of the displacement of the crosspiece 6' with respect to the bush 70. Appearing here are the cam 71, the cam roller 716, the projections 77 of the bush 70 and the reliefs 906 of the edge of the hole 706.

The operation of the machine according to the invention will become evident from what follows. In Figure 3 the machine is illustrated in the rest phase. Following the turning on of the machine via the ON/OFF switch (A) and the START button (B) illustrated in Figure 1, and after suitably setting the regulator (C) for WEAK/STRONG coffee which controls the quantity of infusion water dispensed in the coffee infusion phase, the whole connected to the electronic control rig (D) (Figure 1), the motor 80, via the shaft 81 coupled through the key 82 to the ferrule 73 of the bush 70, begins to impart the rotational movement to the latter. In consequence of this, the roller 74 on the crank 72 of the bush 70 engages one of the slots 427 between the lobes 417 of the plate 407 of the shaft 7: the said shaft therefore executes a step of rotation. As illustrated in Figure 9, the transmission of the motion between the shaft 7 and the bush 70 is designed so that, during a complete rotation of the bush 70, the shaft remains stationary for around 270° of the said rotation, while it executes a further 90° rotation engaging the roller 74 with an identation 427. The stepped rotation of the carousel 5 is thus obtained, making it possible to carry out the phases for the making of the coffee, with the carousel stationary in a given stopping station.

In consequence of this, the carousel 5 executes a step of rotation and the arm 52 of the rocker 51 descends along the cam 50 (see Figure 10), and simultaneously the batcher 30 rotates, rigidly with the chamber 105 on the carousel 5, inside the container 20 for the coffee powder C so as to reach the loading position of the chamber 105 (position 105b of Fig. 2).

Illustrated in Figure 5 is the phase of loading the chamber 105. In this phase, the coffee powder which had descended into the outlet 34 of the batcher in the previous phase, is brought into line with the outlet 23 of the container. The vane 22 of the container prevents excess powder from falling into the chamber 105. The plate 205 of the chamber 105 is in its situation of maximum lowering, on account of the position of the arm 52 which controls the rod 215 connected thereto; the said arm 52 is in fact in the lowest stretch of the profile of the cam 50 (see Figure 10). Scarcely has the loading phase terminated when the roller 74 again engages a slot 427 of the plate 407 in order to perform a new step of displacement of the carousel.

Within the stretch of rotation of the bush 70 in which the crank 72 does not engage with the roller 74 the slots 427 of the plate 407, the cam 71 guides the roller 716 of the crosspiece 6' and causes the said crosspiece, and consequently the crosspiece 6 connected thereto, to be lowered. The shape of the frustoconical element 405 enables the crosspiece 6 to be lowered onto the carousel 5 without causing damage. Advantageously, the cam 71 is formed so as not to make the roller 716, and hence the crosspieces 6', 6, descend when the carousel is moving, that is to say when the roller 74 is engaging the slots 427 of the plate 407. Obviously, in the stopping station of the carousel 5 located below the crosspiece, that is to say the one following the loading station (105c, Fig. 2), when the crosspiece 6 is descending, the pusher 106 penetrates into the chamber 105 previously filled with coffee powder, and compresses the said powder.

Simultaneously, the spout 406 leading from the crosspiece plugs into the socket 322 connected to the pipe 312 leading from the boiler 302, and the spigot 806 plugs, as illustrated in Figure 7, into the socket 115 of the infusion pipe 125, and similarly also the spout 206 plugs into the socket 316. In this phase, suitable control means (not shown) interrupt the electrical contact of the drive means 80, and hence the rotation of the bush 70 is stopped. Following this, with the stopping of the motor, the pump 202 is actuated, this pump drawing water from the reservoir 102 and from there dispatching it, via the boiler 302, to the infusion chamber 105. The heated water is dispatched via the abovementioned pipes 312, 322, 406 and the spigot 806 to be infused in the chamber 105 with the coffee powder compressed therein. The espresso coffee thus obtained is therefore dispensed, from the spout 206 and, through the plug-in socket 316, into the dispensing pipe 306.

Given that, as already stated, the roller 716 is at the lowest point of the cam 71 (see Fig. 11), the presence of the projections 77 of the bush and of the reliefs 906 of the hole 706 in the crosspiece 6' is important because in the compression phase, and in the succeeding dispensing phase, the whole of the burden of the work undertaken by the pusher 106 would be offloaded on to the cam roller 716, quickly causing wear to the cam track 71, with the consequent creation of play between the parts and hence reducing the efficiency of operation of the machine. The presence of the projections 77 which dwell on the reliefs 906, as illustrated in Figure 11, guards the cam 71 from such wear, causing the latter to act exclusively as a guide for the roller 716 in this particular stretch of the track. As illustrated in Figure 12, once this critical point is passed, the projections 77 disengage from the reliefs 906, as in the succeeding parts of the track there are no particular risks in the cam 71/cam roller 716 relationship.

When the coffee has been dispensed in the desired manner and at the desired time, that is to say after the coffee powder has been infused with the appropriate quantity of hot water (strong, regular or weak coffee), the motor 80 is restarted. Its rotation, and the consequent rotation of the bush 70, will again bring the roller 74 of the crank 72 into engagement with a slot 427 of the plate 407: this will lead as a consequence to the execution of a new step of rotation on the part of the carousel 5.

Simultaneously, the rocker 51, following the profile of the cam 50, will thrust the rod 215 upwards, the latter carrying the movable plate 205 of the chamber 105. In this way, as illustrated in Figure 6, the spent coffee powder compress C' will be dispensed from the open side of the chamber 105. If we refer to Figure 2, the carousel 5 is now in the condition illustrated by the chamber 105d, that is to say at the termination of the above-described extraction phase. When the carousel executes its next step, the coffee powder compress C' will encounter the vane 10 on its journey and the latter will make it fall into the collecting module 4, as illustrated in Figure 6. At this point the machine is ready for a new cycle of operation.

The machine for making espresso coffee designed in this way is extremely compact, consisting of a limited number of pieces, and the constructional arrangements which it comprises make it possible to keep down its hardware costs. Furthermore, operationally it is extremely functional and is simple to maintain.

## Claims

1. Machine for making espresso coffee, comprising a reservoir for water, a boiler, a pump inserted in the circuit between the said reservoir and the said boiler, a container for the coffee powder, and a coffee powder infusion chamber connected to the said boiler, characterized in that the said machine comprises:
- means for batching and loading the coffee powder into the infusion chamber;
- means for compressing the said powder in the infusion chamber;
- means for infusing the water, from the said boiler, in the infusion container; means for dispensing the coffee infusion from the said infusion chamber, and
- means for extracting and expelling the spent coffee powder compress from the said infusion chamber.

2. Machine according to Claim 1, characterized in that the infusion chamber is mounted on a rotating carousel, eccentrically with respect to the axis of the said carousel, said carousel being coupled to a driveshaft connected by suitable means of transmission to drive means.

3. Machine according to Claim 2, wherein the said means of transmission transmit the motion to the said driveshaft intermittently, in such a way that a complete rotation of the carousel involves four stopping stations, without the rotation of the drive means being stopped.

4. Machine according to Claim 3, wherein the said means of transmission are a Maltese Cross device comprising a plate with four lobes and four slots which is mounted on the drive shaft, a crank with a pin, and a stopping drum which are mounted on an axle coupled to the drive means.

5. Machine according to Claim 3 or 4, wherein the said container for the coffee powder is placed above the said carousel, is provided with outlet means for the said coffee powder, positioned in line with one of the stopping stations of the said carousel, and comprises in its inside a batcher element coupled with the said driveshaft of the carousel.

6. Machine according to Claim 5, wherein the said outlet means for the coffee powder from the said container are a cylindrical outlet turned towards the said carousel, the said batcher element also being provided with a cylindrical outlet positioned so as always to be in phase with the infusion chamber, the said container moreover comprising a vane which shuts off the upper aperture of the outlet of the batcher when the latter is in phase with the outlet of the container.

7. Machine according to one of Claims 3 to 6, wherein the means for compressing the coffee powder in the infusion chamber comprise a crosspiece endowed with reciprocating motion along the vertical axis, mounted above the said carousel, in line with a stopping station of the said carousel, on two bars connected by suitable means of transmission to drive means, and which crosspiece is provided with a pusher turned towards the said carousel, of dimensions consistent with the inside dimensions of the infusion chamber, said stopping station of the carousel succeeding that occupied by the outlet means of the container for the coffee powder.

8. Machine according to Claim 7, wherein the means for transmitting motion to the said crosspiece carrying the pusher comprise a lower crosspiece fixed to the opposite end of the said bars and parallel to the said crosspiece, provided with a central through-hole furnished with a radial pin on which is mounted a roller which is engaged in the cam profile of a bush coupled with the drive means, the said profile of the cam being formed in such a way that for each rotation of the axle of the drive means, the crosspiece is lowered and raised once.

9. Machine according to Claim 8, wherein the bush bearing the cam profile which transmits the motion to the crosspiece carrying the pusher and the stopping drum and the crank of the Maltese Cross device which transmits the motion to the driveshaft of the carousel, are coupled to the drive means on the same axle.

10. Machine according to Claim 9, wherein the said bush bearing the cam is furthermore provided with a crank furnished with a pin and acts as stopping drum in a Maltese Cross device which transmits the motion to the driveshaft of the carousel.

11. Machine according to any one of Claims 2 to 10, wherein the said means for extracting and expelling the spent coffee powder compress comprise a plate positioned on the bottom of the said infusion chamber and of the same dimensions as the said bottom, the plate being connected to the end of a rod which at its opposite end is engaged by an arm of a hinged rocker swivelling on the driveshaft of the carousel, the arms of the said rocker being guided by a cam, the said cam being formed in such a way that the movable plate on the bottom of the said chamber is lowered in line with the loading and compressing stations of the carousel, and is raised in line with the remaining two succeeding stations, between the said stations there being positioned, grazing the upper edge of the infusion chamber, a vane, radial to the carousel, for expelling the spent coffee powder compress.

12. Machine according to one of Claims 7 to 11, wherein the-means for infusing the water in the infusion chamber and for dispensing the espresso coffee are two spouts connected to the crosspiece carrying the pusher which are plugged into two sockets respectively of the pipes for supplying water from the boiler, and for dispensing the coffee, the said crosspiece moreover being provided with means able to convey the water from the boiler to the infusion chamber, the said conveying of the hot water to the infusion chamber and the said dispensing occurring when the carousel is in line with the stopping station in which the compression occurs.

13. Machine according to Claim 12, wherein the said crosspiece is provided with a spigot communicating with the said infusion spout, which spigot plugs into a socket which communicates with the lower end of the infusion chamber.

14. Machine according to Claim 12 or 13, characterized in that during the infusion of the water and the dispensing of the espresso coffee, the drive means are automatically stopped and remain off for a certain period of time, selected by the user via an appropriate timer.
